# EUROPEAN PATENT SPECIFICATION

(11) **EP 3 584 876 B1**
(45) Date of publication and mention of the grant of the patent: **08.05.2024**
(21) Application number: 18771441.5
(22) Date of filing: 13.03.2018
(51) Int. Cl.: H01M 50/211, H01M 50/224, H01M 50/24, H01M 50/293, H01M 10/04, H01M 10/0585, H01M 10/625, H01M 10/653, H01M 10/647

(54) **BATTERY MODULE AND BATTERY PACK**
BATTERIEMODUL UND BATTERIEPACK
MODULE DE BATTERIES ET BLOC DE BATTERIES

(30) Priority: 22.03.2017 JP 2017055563
(43) Date of publication of application: 25.12.2019
(73) Proprietor: Sekisui Polymatech Co., Ltd., Saitama-city, Saitama 338-0837 (JP)
(72) Inventor: OZAWA, Motoki, Saitama-city Saitama 338-0837 (JP); ISHIDA, Keita, Saitama-city Saitama 338-0837 (JP)
(74) Representative: Schmid, Wolfgang
(86) International application number: PCT/JP2018/009783
(87) International publication number: WO 2018/173860

(56) References cited:
- EP-A1- 2 797 136
- WO-A1-2012/141191
- WO-A1-2016/137303
- WO-A1-2016/137303
- JP-A- 2000 108 687
- JP-A- 2008 300 692
- JP-A- 2012 174 972
- JP-A- 2013 231 166
- US-A1- 2013 017 422

## Description

### Technical Field

The present invention relates to a battery module and a battery pack, the battery module being a layered structure of batteries that are used as a power source mainly for an electric vehicle.

### Background Art

A chargeable and dischargeable secondary battery (hereinafter called a "battery") is widely utilized as a power source for various products, such as electric devices, electronic devices, and electric vehicles. A portable device, such a notebook computer or a smartphone, can be operated using a small-size battery. In an electric vehicle or the like requiring a large output and a large capacity, however, since a single battery cell constituting one battery unit is not enough to operate it, a battery module consisting of a plurality of the battery cells or a battery pack consisting of a plurality of the battery modules is used. A structure of consisting the battery cells is disclosed in, for example, Japanese Unexamined Patent Application Publication (Translation of PCT Application) No. 2008-537299 (Patent Literature 1).

### Citation List

### Patent Literature

PTL 1: Japanese Unexamined Patent Application Publication (Translation of PCT Application) No. 2008-537299

WO 2016/137303 A1 discloses a battery module comprising a module case including a lower plate and a sidewall forming an inside space, a plurality of battery cells provided in the inside space of the module case, and a resin layer provided in the inside space of the module case.

The resin layer is in contact with the battery cells and also in contact with the lower plate or the sidewall of the module case.

EP 2 797 136 A1 describes a thin film battery module comprising a battery module which is configured of unit cells stacked against each other and a shock absorbing portion which surrounds the space between the unit cells and the battery module.

JP 2000 108687 A describes an insulating material of high heat conductivity which is closely packed in an annular space between a battery cell and a case.

JP 2013 231166 A provides a shock absorbing material which is disposed between a heat-generating member and a casing covering the member and radiating heat of the member.

### Summary of Invention

### Technical Problem

However, since the conventional battery modules and battery packs consisting of battery cells have a stout and robust frame structure for fastening the battery cells together in order to rigidly holding the battery cells in multiple layers, the conventional battery is not satisfactory for weight reduction required for an electric vehicle battery. Meanwhile, because the higher performance of the battery tends to increase heat generated by the battery, measures for heat dissipation are becoming increasingly important.

The present invention was made in view of the above-described situations, and an object of the present invention is to provide a battery storage structure that would be a comparatively simple structure, and also be capable of measuring heat dissipation.

### Solution to Problem

To achieve the above object, the present invention provides a battery module and a battery pack as follows.

The present invention provides a battery module according to claim 1.

Since the battery cells are in a flat shape having flat surfaces and includes a flexible film pouch storing battery elements, the size of the battery cell can be easily changed at manufacturing site, and various types of battery cells which are different in output voltage and capacity can be manufactured. Furthermore, the battery cell can be lightweight and compact.

Since the gap-filling material is made of a silicone elastic material containing a thermally conductive filler, the gap-filling material can be prepared in a liquid state, and can be poured into the housing of the battery module by using a dispenser before curing it. Accordingly, the gap-filling material can easily be loaded and is convenient in handling.

Since the gap-filling material has hardness of 80 or more in terms of E hardness or 60 or more in terms of A hardness, the hardness of the gap-filling material is lower than that in the case of using an epoxy- or urethane-based material. Thus, since the gap-filling material is flexible and has followability to impacts, it can hold and adhere to the battery cells, and the battery cell with the module housing, whereby high stability against impacts is ensured. The E hardness and the A hardness are stipulated in JIS K6253. Although the hardness is defined by the wording "80 or more in terms of E hardness or 60 or more in terms of A hardness", it does not imply that an upper limit of the hardness is infinite, and implies that the hardness falls within a range properly expressed by a value representing the E hardness or the A hardness. The maximum hardness in the properly measurable range is about 90 in terms of A hardness.

Since the gap-filling material is loaded between the battery cells and between the battery cell and the module housing, the gap-filling material adheres to the battery cells to be able to rigidly hold the battery cells and to retain a space between the battery cells. Thus, since the space between the battery cells is retained, it is possible to avoid the problem that the battery cells come into contact with each other and are damaged to such as extent as causing effluence of the battery elements contained in the battery cells. Moreover, since the gap-filling material contains the thermally conductive filler, heat generated by the battery cells can be conducted to the module housing.

Since the gap-filling material is filled on one side in a direction intersecting a direction in which the battery cells are arrayed side by side with flat surfaces of the battery cells facing each other, the gap-filling material may be poured from one side of the module housing at the manufacturing site, and there is no need of loading the gap-filling material to such an extent as fully covering the entire surfaces of the battery cells. In the battery cell in the form of the flat member, a cell thickness tends to become thicker in a central portion than in an edge portion. If the gap-filling material is loaded up to reaching the central portion, the gap-filling material comes into a region where the battery cell is maximally bulged in a thickness direction. This results in a possibility that an array of the battery cells is pushed and becomes broader, thereby pressing the module housing from the inner side. By filling the gap-filling material on the one side in the direction intersecting the array direction of the battery cells, it is possible to prevent not only such an increase of the thickness, but also an increase of the weight. In addition, since the battery cell is in a flat shape and stores the battery elements in the flexible film pouch, the thickness of the battery cell may be changed due to repeated charge and discharge in some cases. Thus, the presence of a gap not filled with the gap-filling material is advantageous in increasing an allowance to change in size of the battery cell.

The thermally conductive filler in the silicone elastic material may be at least one selected from among aluminum oxide, boron nitride, aluminum nitride, silicon carbide, and aluminum hydroxide. Since the thermally conductive filler in the silicone elastic material is at least one selected from among aluminum oxide, boron nitride, aluminum nitride, silicon carbide, and aluminum hydroxide, high thermal conductivity can be obtained.

In the above battery module, tensile strength of the silicone elastic material inserted between an aluminum plate and a laminate film may be 0.38 MPa or more. Since the tensile strength of the silicone elastic material inserted between the aluminum plate and the laminate film is 0.38 MPa or more, high adhesion can be obtained between the gap-filling material and each of the housing of the battery module and the battery cell, and the battery cells can be stably arranged inside the battery module.

The gap-filling material is loaded between the flat surface of the battery cell which is positioned at the far end of the array of the battery cells and an inner wall of the module housing. Since the gap-filling material is loaded between the flat surface of the battery cell which is positioned at the far end of the array of the battery cells and an inner wall of the module housing, the battery cell can be prevented from coming into contact with the inner wall of the battery module and from being damaged. Furthermore, the generated heat can be dissipated to the inner wall of the module housing, which is positioned to face the flat surface of the battery cell, and the heat dissipation effect can be increased.

Tensile strength of the silicone elastic material inserted between an iron plate and a laminate film may be 0.40 MPa or more.

Since the tensile strength of the silicone elastic material inserted between the iron plate and the laminate film is 0.40 MPa or more, the following advantageous effect can be obtained. Even when an iron plate is used in a part of the inner wall of the housing of the battery module in order to increase the strength of the housing of the battery module, the part of the inner wall made of the iron plate and the gap-filling material can be adhered to each other. Hence the battery cell can be prevented from coming into contact with the inner wall of the battery module and from being damaged. Furthermore, the generated heat can be dissipated to the inner wall of the module housing, which is positioned to face the flat surface of the battery cell, and the heat dissipation effect can be increased.

In the battery module, thermal conductivity of the silicone elastic material may be 3.0 W/m·K or more. Since the thermal conductivity of the silicone elastic material is 3.0 W/m·K or more, the heat generated by the battery cells can be more easily conducted toward the outside.

Silicone forming the silicone elastic material may be addition-reaction curable type silicone. Since the silicone forming the silicone elastic material is the addition-reaction curable type silicone, liquid silicone before being cured is in a state in that a main agent and a curing agent are divided, and no reaction starts until both the agents are mixed. Hence the liquid silicone has good long-term storage stability. Furthermore, since the silicone elastic material is in a liquid state before being cured, the silicone elastic material is convenient in handling when it is applied or loaded into the module housing. Moreover, since the addition reaction can be promoted by heating, the timing of curing can be adjusted.

The silicone elastic material may be a liquid silicone composition having viscosity of 10 to 500 Pa·s at 25°C before being cured. Since the silicone elastic material is given by curing the liquid silicone composition having viscosity of 10 to 500 Pa·s at 25°C, the liquid silicone composition can be applied by a dispenser. Thus, the liquid silicone composition can be easily poured into the battery module, and high workability is ensured.

The gap-filling material is loaded between the battery cells and between the battery cell and the module housing on a side in which electrodes are projected from a surface of the battery cells, the electrodes can be covered with the gap-filling material. Accordingly, heat dissipation from the electrodes, which generate a comparatively large amount of heat among parts of the battery cell, can be effectively performed.

In the battery module, a surface of the battery cell may be formed of a laminate film. Since the surface of the battery cell is formed of the laminate film, the battery cell can be simply sealed by laminating, and can easily enclose the battery elements therein. Furthermore, since the laminate film is thin and light, the thickness and the weight of the battery cell can be reduced. In addition, high adhesion is obtained with respect to the gap-filling material, i.e., the silicone elastic material containing the thermally conductive filler.

In the battery module, the module housing may be formed of an aluminum plate. Since the module housing is formed of the aluminum plate, high adhesion is obtained with respect to the gap-filling material, i.e., the silicone elastic material containing the thermally conductive filler, and the battery cell and the module housing can be strongly coupled to each other with the gap-filling material interposed therebetween.

The present invention further provides a battery pack including the plurality of battery modules described in any of the above paragraphs, a pack housing storing the battery modules, and a holding material loaded in the pack housing, wherein the holding material is made of the silicone elastic material containing the thermally conductive filler and adheres to the battery modules and the pack housing to conduct heat generated by the battery modules to the pack housing.

Since the battery pack includes the plurality of battery modules described in any of the above paragraphs, the pack housing storing the battery modules, and the holding material loaded in the pack housing, and since the holding material adheres to the battery modules and the pack housing, the heat generated by the battery modules can be conducted to the pack housing.

Since the holding material is made of the silicone elastic material containing the thermally conductive filler, it can be prepared in a liquid state and can be poured into the housing of the battery pack by a dispenser before it has been cured. Accordingly, the holding material can easily be loaded and is convenient in handling.

Furthermore, since the handling material has hardness of 80 or more in terms of E hardness or 60 or more in terms of A hardness, it is flexible and has followability to impacts. Accordingly, the holding material can adhere to the module housing and the pack housing, whereby high stability against impacts is ensured.

Tensile strength of the silicone elastic material inserted between aluminum plates may be 0.80 MPa or more. Since the tensile strength of the silicone elastic material inserted between the aluminum plates is 0.80 MPa or more, adhesion between the aluminum plate and the gap-filling material can be increased. Accordingly, high adhesion can be obtained between the gap-filling material and each of the housing of the battery pack and the housing of the battery module, and the battery modules can be stably arranged inside the battery pack.

In the battery pack, the holding material may be filled in gaps between adjacent two battery modules and adhere to the battery modules to retain a spaced state between the battery modules and to conduct heat generated by one of the battery modules adjacent to the holding material to the other battery module.

Since the holding material is filled in the gaps between adjacent two battery modules and adheres to the battery modules to be able to retain the space between the battery modules, the battery modules can be prevented from coming into contact with each other and from being damaged. Furthermore, since the heat generated by one of the battery modules adjacent to the holding material is conducted to the other battery module through the holding material filled in the gap between the battery modules, the heat can be dissipated to the adjacent battery module even when the temperature of one among the plurality of battery modules becomes excessively high.

Moreover, since the holding material is filled between the battery modules and between the battery module and the pack housing, the heat generated by the battery cells can be conducted to the battery modules, and the heat conducted to the battery modules can be further conducted to the pack housing.

In the battery pack, the pack housing may be formed of an aluminum plate.

Since the pack housing is formed of the aluminum plate, high adhesion is obtained with respect to the holding material, i.e., the silicone elastic material containing the thermally conductive filler, and the battery module and the pack housing can be strongly coupled to each other with the holding material interposed therebetween.

### Advantageous Effects of Invention

According to the battery module of the present invention, the battery cells can be stably held inside the battery module, and the heat generated by the battery cells can be efficiently dissipated.

Furthermore, according to the battery pack of the present invention, the battery modules can be stably held, and the heat generated by the battery modules can be efficiently dissipated.

### Brief Description of Drawings

[Fig. 1] Fig. 1 is an explanatory view of a battery module.
[Fig. 2] Fig. 2 is a perspective view of a battery cell.
[Fig. 3] Fig. 3 is an explanatory view referenced to explain an assembled state of the battery cells and partition plates.
[Fig. 4] Fig. 4 is an explanatory view referenced to explain a state of assembling the battery modules into a battery pack.
[Fig. 5] Fig. 5 is an explanatory view illustrating another form of the battery pack.
[Fig. 6] Fig. 6 is an explanatory view illustrating still another form of the battery pack.

### Description of Embodiments

A battery module and a battery pack according to the present invention will be described below with reference to the drawings. Regarding the same material, composition, manufacturing method, operation, advantageous effect, etc. in different embodiments, duplicated description is omitted.

### Battery Module:

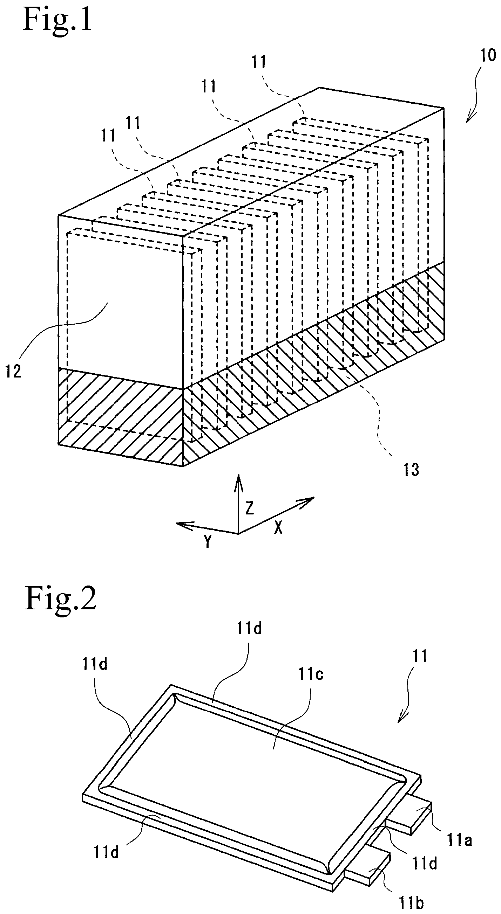

As illustrated in a schematic explanatory view of Fig. 1, a battery module 10 includes a plurality of battery cells 11, a battery module housing (hereinafter called a "module housing") 12 in which the battery cells 11 are stored, and a gap-filling material 13 loaded in the module housing 12. Those components will be described below.

The battery cell 11 is a structural unit constituting a secondary battery such as a lithium ion battery and includes an outer flexible packaging film packaging a battery element having plural pairs of a positive plate and a negative plate which are arranged in alternate layers with a partition plate inserted between every positive and negative planes, and electrolyte in a laminate structure. The battery cell 11 is in a flat shape which is very thin in comparison with its height and width. As illustrated in Fig. 2, the battery cell 11 has a positive terminal 11a and a negative terminal 11b exposed to the outside, and its central portion 11c being thinner than its press-bonded edge portion 11d.

A laminate film formed in a multi-layer structure which has an intermediate layer of a metal layer made of an aluminum foil, an aluminum vapor-deposited film, or the like, which is placed between a thermally fusible layer made of polypropylene or the like and a protective layer made of PET or the like can be used as the outer packaging film. Because such an outer packaging film has high performance in gas barrier property, light shielding property, and opaqueness to ultraviolet rays, it can reliably prevent adverse influences on the battery elements enclosed in the outer packaging film. Moreover, because the outer packaging film has electrical insulation, it can reliably prevent electrical influences from the outside.

The module housing 12 storing the battery cells 11 has a member covering the battery cells 11 together. The module housing 12 is made of a material which has strength enough to support the battery cells 11 and cannot be deformed by heat generated by the battery cells 11. In consideration of balance among strength, weight, heat resistance, etc., the module housing 12 would preferably be made of aluminum. A surface of the module housing 12 would preferably be coated with an epoxy-based coating material to have electrical insulation so that the module housing 12 can prevent electrical influences from the outside.

The gap-filling material 13 is made of a silicone elastic material containing a thermally conductive filler. The silicone elastic material is obtained by mixing the thermally conductive filler into liquid silicone before being cured, and then curing the mixture (liquid silicone composition).

The liquid silicone may be the addition reaction type to react organohydrogenpolysiloxane having a hydrogen atom bonded to a silicon atom which is a curing agent, and organopolysiloxane containing an alkenyl group as a main agent with a platinum catalyst, the radical curable reaction type using an organic peroxide, the condensation reaction type, or the curable type using an ultraviolet ray or an electron beam.

The thermally conductive filler is a substance giving thermal conductivity to the silicone elastic material, and can be made of a material having satisfactory electrical insulation and high thermal conductivity. For example, aluminum oxide, boron nitride, aluminum nitride, silicon carbide, aluminum hydroxide, etc. would be preferable because they have excellent properties in electrical insulation and thermal conductivity. The shape of particles of those materials may be spherical, fibrous, needle-like, or scaly. Among the above-mentioned materials, aluminum oxide and aluminum hydroxide would be more preferable. Aluminum hydroxide can reduce the specific gravity of the silicone elastic material containing the thermally conductive filler and can prevent separation between the liquid silicone and the thermally conductive filler. Aluminum oxide has high thermal conductivity and can effectively increase the thermal conductivity because it can be formed into large-size particles.

The shape of aluminum oxide would preferably be spherical. This is because spherical shape makes it easier to reduce a specific surface area. In the case of using a thermally conductive filler which is made from combination of aluminum hydroxide and aluminum oxide, since, as long as the specific surface area is small, fluidity of the liquid silicone composition is hardly reduced even when a proportion of large-size particles of the aluminum hydroxide is increased, it provides the liquid silicone composition which can be easily handled to load into a battery module or a battery pack.

The content of the thermally conductive filler with respect to the liquid silicone can be set to 100 to 1500 weight parts with respect to 100 weight parts of the liquid silicone. If the content of the thermally conductive filler is smaller than 100 weight parts, there is a possibility that the thermal conductivity is insufficient. If the content of the thermally conductive filler is greater than 1500 weight parts, there is a possibility that viscosity of the liquid silicone composition may increase and the usability of the liquid silicone composition may be worse.

The viscosity of the liquid silicone composition at 25°C and at the time immediately after mixing the main agent and the curing agent, would preferably be 10 to 500 Pa·s. If the viscosity is lower than 10 Pa·s, there is a possibility that a loading amount of the thermally conductive filler may be too small and that sufficient thermal conductivity may not be obtained. If the viscosity is higher than 500 Pa·s, there is a possibility that the viscosity may be too high to dispense the liquid silicone composition and that clogging may occur. The viscosity would preferably be 100 to 350 Pa·s from the viewpoint of improving balance between demands for satisfying the desired thermal conductivity and ensuring discharge stability when the liquid silicone composition is dispensed.

Various additives may be mixed into the liquid silicone composition. Examples of the additives include a dispersant, a flame retardant, a coupling agent, a plasticizer, a curing retardant, an antioxidant, a colorant, and a catalyst.

Inside the battery module 10, as illustrated in Fig. 1, the battery cells 11 are arranged in a manner that the flat surfaces of the battery cells 11 face to each other.

The gap-filling material 13 is loaded on one side in a direction (Z-axis direction in Fig. 1) intersecting a direction (X-axis direction in Fig. 1) in which the battery cells are arrayed side by side, i.e., on the lower side in Fig. 1, and is inserted between the battery cells 11 and between the battery cells 11 and the module housing 12. The gap-filling material 13 does not entirely cover the battery cells 11, and is not filled up to the upper side in Fig. 1, which remains a vacant space.

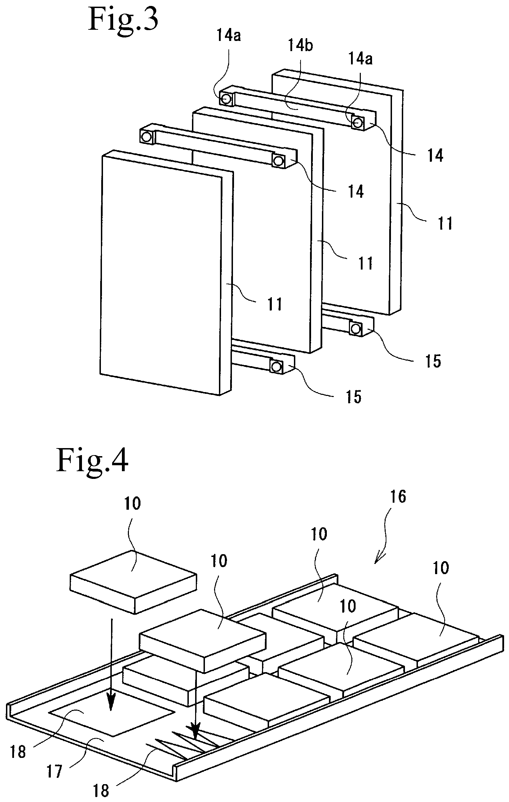

A structure of arraying the battery cells 11 in the battery module 10 will be complementarily described below with reference to Fig. 3.

As illustrated in Fig. 3, partition plates 14 and 15 would preferably be placed between two of the battery cells 11 which are adjacent to each other in order that the battery cells 11 are stably arranged at equal intervals in a manner of facing each other. The partition plate 14 used in this embodiment has thick engagement portions 14a and 14a which are formed at both ends and each of which is projected on one side and is recessed on the other side, and a thin retaining portion 14b in a central region.

In order to array the battery cells 11, each partition plate 14 retains the edge portion 11d of the battery cell 11 in the retaining portion 14b and couples to the adjacent partition plate 14 by engaging the engagement portions 14a of the partition plates which are adjacent to each other. The partition plate 15 also functions in the same manner. Thus, a plurality of battery cells 11 can easily be arrayed by the partition plates 14 and 15 which hold the battery cells 14 at the upper and lower ends of the battery cell 11 in the above described manner. The battery cells 11 can be placed in a frame formed by the partition plates 14 and 15 but are not completely fixed by the partition plates 14 and 15 due to play set between the retaining portion of the partition plate and the end portion 11d of the battery cell 11, and then completely fixed by the silicone elastic material 13 loaded thereafter. The partition plates 14 and 15 can be made of a resin material or a rubber material. It is to be noted that the electrodes 11a and 11b of the battery cell 11 are omitted in Figs. 1 and 3, and that the partition plates 14 and 15 are omitted in Fig. 1.

The silicone elastic material can be loaded and formed in the battery module 10 by applying or pouring liquid silicone composition into the battery module 10 with a conventional dispenser, and then curing the liquid silicone composition.

The addition reaction type of liquid silicone composition which contains organosiloxane and is cured by mixing two liquids of the main agent and the curing agent is easy to be stored, hardly cured during work of applying the composition by the dispenser because of mixing the two liquids immediately before use, and can be quickly cured after the application. In addition, that type of liquid silicone composition is beneficial in a point that the hardness of the cured composition can be controlled by selecting types of the curing agent and/or adjusting a mixed amount of the curing agent.

Furthermore, it would be beneficial that the dispenser used for the application can load the liquid silicone composition up to a comparatively deep place inside the housing 12 of the battery module 10.

In order to cure the liquid silicone composition, a certain curing means can be selected depending on a type of the liquid silicone. For example, some types of the liquid silicone composition may be cured just by leaving it at a room temperature during a certain time, by heating, or by irradiating ultraviolet rays.

The hardness of the silicone elastic material which have been applied and cured inside the battery module 10 in the manner described above may be a value of 80 or more when measured by a hardness tester of Type E complying with JIS K6253 (hereinafter called "E hardness"), or a value of 60 or more when measured by a hardness tester of Type A complying with JIS K6253 (hereinafter called "A hardness"). Preferably, the hardness would be 82 or more in terms of E hardness or 61 or more in terms of A hardness. In a condition that the E hardness is 80 or more or the A hardness is 60 or more, once the battery cells 11 are arranged in the battery module 10 and the gap-filling material 13 is loaded on the one end of the battery cells 11, the gap-filling material 13 can satisfactorily dissipate heat from the battery cells 11, and stably hold the battery cells 11 by virtue of close adhesion between the battery cells 11 and the gap-filling material 13 even if the battery module 10 receives vibration. Furthermore, when the E hardness is 80 or more and the A hardness is 60 or more, tensile strength of the silicone elastic material also increases. On the other hand, when the E hardness is 62 or less or the A hardness is 35 or less, the gap-filling material would peel apart from the battery cells due to vibration, stability in holding the battery cells would be lost, and the tensile strength would decrease.

In consideration of the loading of the gap-filling material 13 between the battery cells 11 in the battery module 10, the tensile strength of the silicone elastic material would preferably be 0.38 MPa or more as a value measured in a state in which the gap-filling material 13 is inserted between an aluminum plate (module housing 12) and the laminate film. The reason is as follows. Where the tensile strength is 0.38 MPa or more, since adhesion between the gap-filling material 13 and the aluminum plate and between the gap-filling material 13 and the laminate film is high, the battery cells 11 can be stably held in the battery module 10. Furthermore, the high adhesion between each of the battery cells 11 and the gap-filling material 13 makes it possible that, even when subjected to vibrations, the battery cells 11 can be stably held without entirely covering the battery cells 11 with the gap-filling material 13. Accordingly, a position in which the battery cells are placed can be prevented from being shifted even when subjected to vertical vibration caused by moving a vehicle, force in a lateral direction generated during turning a vehicle (i.e., centrifugal force), or force in longitudinal direction generated at starting and stopping a vehicle starts. The tensile strength would more preferably be 0.40 MPa and even more preferably be 0.45 MPa. On the other hand, if the tensile strength is lower than 0.2 MPa, the adhesion between each of the battery cells 11 and the gap-filling material 13 becomes poor when subjected to vibrations, and retention of stability would degrade.

Furthermore, the tensile strength of the silicone elastic material would preferably be 0.40 MPa or more, more preferably be 0.43 MPa or more, and even more preferably be 0.50 or more in a state in which the gap-filling material 13 is inserted between an iron plate and the laminate film. The reason is that, even when part of the housing of the battery module 10 is formed of an iron plate, high adhesion of the gap-filling material to the iron plate would be obtained.

The thermal conductivity of the silicone elastic material would preferably be 3.0 W/m·K or more. If the thermal conductivity of the silicone elastic material is lower than 3.0 W/m·K, efficiency in dissipating the heat generated by the battery cells 11 to the outside worsens. In contrast, when it is 3.0 W/m·K or more, the heat generated by the battery cells 11 can be efficiently conducted to the module housing 12 through the silicone elastic material, and excessive deterioration of the battery cells 11 can be prevented.

The gap-filling material 13 covering the battery cells 11 covers 20 to 40% of the battery cells 11 on the one end thereof. If the coverage is lower than 20%, it would be difficult to stably hold the battery cells 11. Moreover, there would be a possibility that the efficiency of heat dissipation may be reduced because the electrode portions of the battery cells, which generate a large amount of heat, cannot be sufficiently covered with the gap-filling material. On the other hand, if the coverage is higher than 40%, problems of increasing the weight and deteriorating working efficiency would arise as well as a dissipation amount of the heat generated by the battery cells 11 cannot be increased. In addition, the gap-filling material 13 would preferably cover a portion of the battery cells 11 where the electrodes 11a and 11b are provided, and entirely cover the electrodes 11a and 11b.

In the battery module 10, as described above, the heat generated by the battery cells 11 can be dissipated to the module housing 12. Furthermore, since the gap-filling material 13 is made of the silicone-based material, the gap-filling material 13 provides high adhesion with respect to the laminate film that is the surface material of the battery cells 11, the aluminum plate forming the module housing 12, and an epoxy-based coating material coated over the module housing 12. In addition, the silicone-based material has lower hardness than epoxy- and urethane-based materials. Therefore, the gap filling material 13 would be flexible, and can mitigate an effect of vibration and impact on the battery module 10 when the vibration or impact is caused at starting or stopping a vehicle, or during moving a vehicle. Accordingly, the gap-filling material 13 would hardly peel apart from the battery cells 11 and the module housing 12. Thus, the gap-filling material 13 can provide high impact resistance, and maintain satisfactory thermal conductivity due to its high adhesion. Moreover, the gap-filling material 13 can prevent the battery cells 11 from wobbling in the battery module 10 and from coming into contact with an inner wall of the module housing 12 or with their adjacent battery cells. Since the gap-filling material 13 as much as necessary to fill up a part of an inner space of the battery module 10 has only to be loaded, an increase in the weight of the battery module 10 can be limited.

### Battery Pack:

As illustrated in a schematic explanatory view of Fig. 4, the battery pack 16 includes a plurality of battery modules 10, a battery pack housing (hereinafter called a "pack housing") 17 storing the battery modules 10, and a holding material 18 loaded in the pack housing 17. Those components will be described below.

The battery modules 10 shown in Fig. 4 is the same as the battery module 10 which is previously described, and is a structural component of the battery cells 11. The pack housing 17 stores a plurality of the battery modules 10 and can be made of a similar material to that of the module housing 12. The holding material 18 can be made of the silicone elastic material containing the thermally conductive filler, which is used as the above-described gap-filling material 13.

As illustrated in Fig. 4, the battery pack 16 comprises a plurality of the battery modules 10 which are rigidly held on the pack housing 17 which is formed by, for example, an aluminum frame, by the silicone elastic material containing the thermally conductive filler.

In the battery pack 16, heat generated by the battery modules 10 can be dissipated to the pack housing 17 of a relatively large size through the holding material 18. Thus, the heat generated by the individual battery cells 11 can be conducted to the pack housing 17 through the gap-filling material 13, the module housing 12, and the holding material 18, and hence can be efficiently dissipated to the outside.

In addition to providing the heat dissipation effect, the gap-filling material 13 and the holding material 18 can rigidly hold the battery cells 11 and the battery modules 10 in order to prevent them from wobbling caused by vibration or impact during moving a vehicle because those materials have high adhesion to the module housing 12 and the pack housing 17, both of which have resin-coated surfaces, and are also flexible.

Thus, the battery pack 16 has a structure capable of dissipating the heat generated by the battery cells 11 to the battery pack 16 which is relatively large in size, and, therefore, can efficiently dissipate the heat. Furthermore, since the gap-filling material 13 and the holding material 18 can be made of the same silicone elastic material, heat dissipation design of the battery pack 16 is facilitated, and production of the battery pack 16 at a manufacturing site is also facilitated.

In consideration of the loading of the gap-filling material 13 between the battery packs 16, the tensile strength of the silicone elastic material would preferably be 0.80 MPa or more as a value measured in a state in which the gap-filling material 13 is inserted between two aluminum plates. Where the tensile strength is 0.80 MPa or more, high adhesion is obtained when the gap-filling material 13 is inserted between two aluminum plates, and makes it possible to stably hold the battery packs 16 in right place.

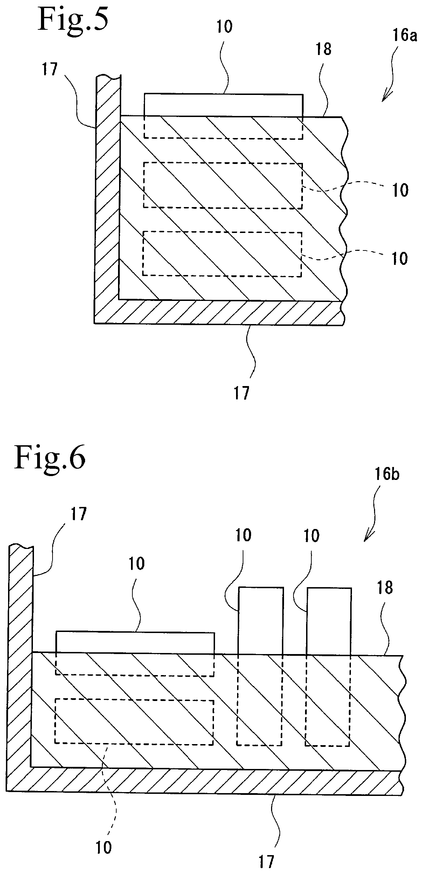

Fig. 5 illustrates a battery pack 16a which has a different structure from the above-described battery pack 16. The battery pack 16a according to this embodiment has a stacked structure of the battery modules 10. The holding material 18 is loaded between adjacent two stacked battery modules 10, and surrounds entire surface of the battery module 10 positioned in the lower side in the Fig. 5. Fig. 6 illustrates a battery pack 16b which has another structure. In the battery pack 16b according to this embodiment, the battery modules 10 are arranged in a combination manner that the battery modules 10 arrayed in two different directions.

As described above, the stacked battery modules 10 are rigidly holding in the closely coupled manner, retaining spaces between adjacent two battery modules 10. The holding material 18 can also adhere to the battery modules 10. Thus, since spaces between the battery modules 10 can be retained, heat generated by one of the battery modules 10 can be conducted to the adjacent battery module through the holding material 18 filled in the gap between those battery modules. Accordingly, even if the temperature of one of the battery modules 10 becomes excessively high, heat generated by the battery module can be dissipated to the module housing 12 of the other adjacent battery module 10. It is easy to avoid troubles caused by a local temperature rise in the battery pack 16a and 16b, such as deformation of the battery module 10 and a malfunction with resect to the output.

### EXAMPLES

### Production of Silicone Elastic Material Containing Thermally Conductive Filler:

The liquid silicone composition to be the silicone elastic material was produced by a method described below. An addition-reaction curable type of universal silicone to be mixed with a main agent comprising vinyl-terminated organopolysiloxane and two types of curing agents using organohydrogen polysiloxanes which are different from each other in number of Si-H functional groups was prepared as a binder. Liquid silicone compositions for Samples 1 to 6 were produced by adding and mixing, as the thermally conductive fillers, 140 weight parts of aluminum hydroxide powder having no regular form and having a mean particle size of 1 µm, 200 weight parts of spherical alumina having a mean particle size of 3 µm, and 600 weight parts of spherical alumina having a mean particle size of 70 µm to 100 weight parts of the binder in total of the main agent and the two kinds of curing agents mixed at an appropriate ratio. Thereafter, Samples 1 to 6 of silicone elastic bodies are produced by curing the above liquid silicone compositions for Samples 1 to 6. Samples 1 to 6 of silicone elastic bodies have different E hardness and A hardness respectively. The following Table 1 lists the E hardness and the A hardness for each of the silicone elastic bodies of Samples 1 to 6.

**[Table 1]**

| | | Sample 1 | Sample 2 | Sample 3 | Sample 4 | Sample 5 | Sample 6 |
|---|---|---|---|---|---|---|---|
| Hardness of Liquid Silicone Composition | E Hardness | 25 | 55 | 62 | 82 | 86 | - |
| | A Hardness | - | 29 | 35 | 61 | 69 | 88 |
| Surface Roughness Ra (µm) | Aluminum Plate | 2.2 | | | | | |
| | Laminate Film | 0.7 | | | | | |
| | Iron Plate | 2.0 | | | | | |
| Tensile Strength (MPa) | Aluminum Plate vs Aluminum Plate | 0.10 | 0.19 | 0.21 | 0.80 | 0.82 | 1.15 |
| | Aluminum Plate vs Laminate Film | 0.07 | 0.13 | 0.14 | 0.38 | 0.40 | 0.45 |
| | Laminate Film vs Iron Plate | 0.08 | 0.15 | 0.17 | 0.40 | 0.43 | 0.50 |
| Thermal Conductivity (W/m·K) | | 3.08 | 3.05 | 3.06 | 3.02 | 3.05 | 3.09 |
| Viscosity Immediately after Mixing of Main Agent and Hardening Agents (Pa s) | | 274 | 267 | 261 | 254 | 248 | 244 |

### Viscosity:

From the viewpoint of handling during applying or loading the liquid silicone composition into the module housing, the viscosity of the liquid silicone composition for each of Samples 1 to 6 was measured. The viscosity was measured at the time when immediately after mixing the main agent and the curing agents for the binder. The measurement was performed at a rotation speed of 10 rpm and a temperature of 25°C by using, as a rotor, a spindle SC-14 of a viscometer (BROOKFIELD Rotational Viscometer DV-E). The measured results are listed in Table 1.

### Thermal Conductivity:

The silicone elastic body for each of Samples 1 to 6 was cut into a plate with a thickness of 20 mm, and the thermal conductivity of the plate was measured complying with ASTM D5470. The measured results are also listed in Table 1.

### Tensile Strength:

The tensile strength of the silicone elastic body for each of Samples 1 to 6 was tested in a state in which the silicone elastic body is inserted between various materials described below.

### (1) Tensile Strength Test on Combination between Aluminum Plate And Aluminum Plate

Two aluminum plates having a length of 100 mm, a width of 25 mm, and a thickness of 2 mm were prepared and positioned in a manner that the end portions of the aluminum plates were overlapped in a region of 25 mm × 25 mm in vertical and horizontal directions. A specimen for each of Samples 1 to 6 was fabricated by applying each of the above-described liquid silicone compositions in a thickness of 1.5 mm between the overlapped aluminum plates, and curing the liquid silicone composition by leaving it in a thermostatic oven at 60°C for 24 hours. The surface roughness Ra (arithmetic mean roughness) of the aluminum plate was measured complying with JIS B0601:2001 by using a roughness meter of VK-X100 series by KEYENCE CORPORATION. A measured value of the surface roughness was obtained by measuring the surface roughness at five points arbitrarily selected in the region where the liquid silicone composition is coated, and calculating a mean value of the five measured values. The determined results are listed in Table 1. Furthermore, a tensile test was performed on each specimen by a tensile tester (STROGRAFH VE50 by Toyo Seiki Seisaku-sho, Ltd.) under the conditions of room temperature of 25°C and tensile speed of 100 mm/min. The test results are also listed in Table 1.

### (2) Tensile Strength Test on Combination between Aluminum Plate And Laminate Film

The above-described aluminum plate (having the length of 100 mm, the width of 10 mm, and the thickness of 2 mm) and a laminate film (aluminum pouch (100 mm × 10 mm × 0.1 mm)) including a PET film formed over a surface to be coated with the liquid silicone composition were prepared and positioned in a manner that the end portions of the aluminum plate and the laminate film were overlapped in a region of 10 mm × 10 mm in vertical and horizontal directions. A specimen for each of Samples 1 to 6 was fabricated by applying each of the above-described liquid silicone compositions in a thickness of 0.7 mm between the overlapped aluminum plate and laminate film, and curing the liquid silicone composition by leaving it in a thermostatic oven at 60°C for 24 hours. The surface roughness Ra (arithmetic mean roughness) of the laminate film was measured complying with JIS B0601:2001 by a roughness meter of VK-X100 series by KEYENCE CORPORATION. A method of measuring the surface roughness was similar to that in the above-described measurement for the aluminum plate. The measured results are listed in Table 1. Furthermore, a tensile test was performed on each specimen by the above-described tensile tester under the conditions of room temperature of 25°C and tensile speed of 100 mm/min. The test results are also listed in Table 1.

### (3) Tensile Strength Test on Combination between Laminate Film And Iron Plate

The above-described laminate film (100 mm × 10 mm × 0.1 mm) and an iron plate (100 mm × 10 mm × 2 mm) were prepared. Then, a specimen for each of Samples 1 to 6 was fabricated in a similar manner to that in the above-described tensile strength test for the combination of the aluminum plate and the laminate film. The surface roughness Ra (arithmetic mean roughness) of the iron plate was measured complying with JIS B0601:2001 by the roughness meter of VK-X100 series by KEYENCE CORPORATION. A method of measuring the surface roughness was similar to that in the above-described measurement for the aluminum plate. The measured results are listed in Table 1. Furthermore, a test method for tensile strength was performed on each specimen in a similar manner to that in the above-described tensile strength test for the combination of the aluminum plate and the laminate film. The test results are also listed in Table 1.

Regardless of the materials used in the tensile tests, the silicone elastic bodies having the higher E hardness or A hardness have higher values of the tensile strength. Furthermore, while Samples 1-3 have the tensile strength of 0.21 MPa or less and the E hardness of 62 or less, Sample 4 has the tensile strength of 0.80 MPa which is sharply increased from the tensile strength of Sample 3, and the E hardness of 82. Regarding Sample 6 having the A hardness of 88, its tensile strength is increased up to 1.15 (see the tensile tests on the combination between aluminum plate and aluminum plate).

The aluminum plate has the surface roughness Ra of 2.2, and surface irregularities which are greater than those of the PET laminate film having the surface roughness Ra of 0.7. Thus, it deems that, because the silicone binder comes into the deeper portion of the surface of the aluminum plate and is more strongly caught by the surface irregularities, the tensile strength in the combination between aluminum plate and aluminum plate increases, whereby adhesion force is increased as well.

The PET laminate film has the surface roughness Ra of 0.7, and surface irregularities which are shallower than those of the aluminum plate. Thus, it deems that, because the silicone binder comes only into the shallower portion of the surface of the film and is more weakly caught by the surface irregularities, the tensile strength in the combination of aluminum plate and PET laminate film becomes weaker than that in the combination of aluminum plate and aluminum plate.

The surface roughness Ra of the iron plate is 2.0 that is a value close to the surface roughness Ra of 2.2 of the aluminum plate. Thus, it is estimated that the tensile strength in the combination of iron plate and PET laminate film has a value close to that of the tensile strength in the combination of aluminum plate and PET laminate film.

A plurality of mock-ups of battery cells simulating the battery cells were prepared by filling electrolyte into the laminate film pouch used in the above-described tensile test. Then, the mock-ups of battery modules for Samples 1 to 6 were fabricated by placing the mock-ups of battery cells in an aluminum box having an opened upper surface with their flat surfaces facing each other, loading the liquid silicone composition for each of Samples 1 to 6 into the aluminum box up to a level as much as 30% of the height of the mock-ups of battery cells from the bottom, and curing the liquid silicone composition. In the situation, the mock-ups of battery cells were arranged in a manner that, in a state in which the liquid silicone composition had been cured, the space between the bottom of the aluminum box and lower ends of the mock-up of battery cells was 1 cm, the space between a sidewall of the aluminum box and the mock-up of battery cell was 1 cm, and the space between the mock-ups of battery cells facing each other was 1 cm.

After driving a passenger car for 24 hours, the trunk of which is loaded with the mock-ups of battery modules which were fabricated as described above, interstices had been caused between the mock-up of battery cell and the gap-filling material and between the aluminum box and the gap-filling material in the mock-up of battery modules having the cured liquid silicone compositions of Samples 1 to 3. On the other hand, there were no changes in the mock-up of battery modules having the cured liquid silicone compositions of Samples 4 to 6.

The embodiment and EXAMPLES described above merely represent illustrative examples of the present invention, and may be modified, and, added, combined and/or applied with any related art to the present invention. Such a variety of those techniques also fall within the scope of the present invention.

For instance, the shape, the structure, the assemble manner, etc. of the partition plates 14 and 15 assembled in the battery module 10 are not limited to the above-described ones. As an alternative, the partition plate may be a frame capable of surrounding four corners of the battery cell 11, or may have a through-hole instead of the engagement portion 14a and may rigidly hold the battery cell 11 by a screw penetrating to the edge portion 11d of the battery cell 11 through the through-hole. In addition, the storage portion of the partition plate 15 is not necessarily required to be the same shape as the partition plate 14, and may have a shape corresponding to the electrodes 11a and 11b projecting from the battery cell 11.

While the pack housing 17 is illustrated in the shape having an opening, the shape of the pack housing 17 is not limited and may be a box-like or cylindrical.

While the descriptions of wirings for connecting the electrodes 11a and 11b of each battery cell 11 between the adjacent battery cells, wirings for connecting the battery modules 10, etc. are omitted, those wirings can be set up depending on the structure of the battery cell 11, the arrangement of the battery modules 10, etc.

### Reference Signs List

- 10: battery module
- 11: battery cell

- 11a: positive terminal (electrode)
- 11b: negative terminal (electrode)
- 11c: central portion of battery cell
- 11d: end portion of battery cell

- 12: housing of battery module (module housing)
- 13: gap-filling material
- 14, 15: partition plate

- 14a: engagement portion
- 14b: storage portion

- 16: battery pack
- 17: housing of battery pack (pack housing)
- 18: holding material

## Claims

1. A battery module (10) comprising a plurality of battery cells (11), a module housing (12) storing the battery cells (11), and a gap-filling material (13) loaded in the module housing (12),
wherein the battery cell (11) is in a flat shape having flat surfaces and includes a flexible film pouch storing battery elements; and
the gap-filling material (13) is made of a silicone elastic material containing a thermally conductive filler and having hardness of 80 or more in terms of E hardness complying with JIS K6253 or 60 or more in terms of A hardness complying with JIS K6253,
wherein the silicone elastic material is formed by a cured material of an addition-reaction curable type silicone mixed from a main agent and curing agents,
wherein the gap-filling material (13) is loaded between the battery cells (11) and between the battery cell (11) and the module housing (12) on one side in a direction intersecting a direction in which the battery cells (11) are arrayed side by side with the flat surfaces of the battery cells (11) facing each other, and covering 20 to 40% on the said one side of the battery cells (11), and adheres to the battery cells (11) for retaining a space between the battery cells (11) and for conducting heat generated by the battery cells (11) to the module housing (12),
wherein there is a gap in the portion of the module housing (12) that is not filled with the gap-filling material (13).

2. The battery module (10) according to claim 1, wherein the thermally conductive filler is at least one selected from among aluminum oxide, boron nitride, aluminum nitride, silicon carbide, and aluminum hydroxide.

3. The battery module (10) according to claim 1 or 2, wherein the module housing (12) is formed of an aluminum plate.

4. The battery module (10) according to any one of claims 1 to 3, wherein the silicone elastic material constituting the gap-filling material (13) has tensile strength of 0.38 MPa or more when it is inserted between the aluminum plate and a laminate film,
wherein the tensile strength is measured by a tensile tester under the conditions of room temperature of 25°C and tensile speed of 100 mm/min.

5. The battery module (10) according to any one of claims 1 to 4, wherein the silicone elastic material constituting the gap-filling material (13) has tensile strength of 0.40 MPa or more when it is inserted between an iron plate constituting the module housing (12) and the laminate film,
wherein the tensile strength is measured by a tensile tester under the conditions of room temperature of 25°C and tensile speed of 100 mm/min.

6. The battery module (10) according to any one of claims 1 to 5, wherein the gap-filling material (13) is loaded between the flat surface of the battery cell (11) which is positioned at the far end of the array of the battery cells (11) and an inner wall of the module housing (12).

7. The battery module (10) according to any one of claims 1 to 6, wherein the silicone elastic material constituting the gap-filling material (13) has thermal conductivity of 3.0 W/m·K or more,
wherein the thermal conductivity is measured complying with ASTM D5470.

8. The battery module (10) according to any one of claims 1 to 7, wherein the silicone elastic material is a cured material from liquid silicone composition having viscosity of 10 to 500 Pa,
wherein the viscosity is measured at the time when immediately after mixing the main agent and the curing agents, and is measured at a rotation speed of 10 rpm and a temperature of 25^C by using a viscometer.

9. The battery module (10) according to any one of claims 1 to 8, wherein the battery cell (11) has electrodes which are projected from a surface of the battery cell (11); and
the gap-filling material (13) is loaded between the battery cells (11) and between the battery cell (11) and the module housing (12) on a side in which the electrodes are projected from a surface of the battery cell (11).

10. The battery module (10) according to any one of claims 1 to 9, wherein the surface of the battery cell (11) is formed of a laminate film.

11. The battery module (10) according to any one of claims 1 to 10, wherein there are partition plates (14,15) placed between two of the battery cells (11),
wherein each of the partition plates (14,15) has thick engagement portions (14a) which are formed at both ends and each of which is projected on one side and is recessed on the other side, and a thin retaining portion in a central region.

12. The battery module (10) according to claim 11,
wherein the battery cells (11) are arranged side by side by engaging each of the upper end and the lower end of the battery cells (11) in the engagement portions (14a) of the partition plates (14,15).

13. The battery module (10) according to claim 11 or claim 12,
wherein a play is provided between the retaining portion of the partition plate (14,15) and the end portion of the battery cell (11), and the battery cell (11) is arranged in the frame of the partition plate (14,15) without being completely fixed.

14. A battery pack (16) comprising the plurality of battery modules (10) according to any one of Claims 1 to 13, a pack housing (17) storing the battery modules (10), and a holding material (18) loaded in the pack housing (17),
wherein the holding material (18) is made of the silicone elastic material constituting the gap-filling material (13) containing the thermally conductive filler and adheres to the battery modules (10) and the pack housing (17) to conduct heat generated by the battery modules (10) to the pack housing (17).

15. The battery pack (16) according to claim 14, wherein the pack housing (17) is formed of an aluminum plate.

16. The battery pack (16) according to claim 14 or claim 15, wherein the silicone elastic material constituting the gap-filling material (13) has tensile strength of 0.80 MPa or more when it is inserted between aluminum plates constituting the pack housing (17),
wherein the tensile strength is measured by a tensile tester under the conditions of room temperature of 25°C and tensile speed of 100 mm/min.

17. The battery pack (16) according to claim 14 or 16, wherein the holding material (18) is filled in gaps between adjacent two battery modules (10), and adheres the battery modules (10) to retain a space between the battery modules (10) and to conduct heat generated by one of the battery modules (10) adjacent to the holding material (18) to the other battery module (10).

## Patentansprüche

1. Batteriemodul (10) mit einer Vielzahl von Batteriezellen (11), einem Modulgehäuse (12), das die Batteriezellen (11) aufnimmt, und einem in das Modulgehäuse (12) eingebrachten Spaltfüllmaterial (13),
wobei die Batteriezelle (11) eine flache Form mit flachen Oberflächen aufweist und eine flexible Folientasche enthält, die Batterieelemente speichert; und
das Spaltfüllmaterial (13) aus einem elastischen Silikonmaterial hergestellt ist, das einen thermisch leitfähigen Füllstoff enthält und eine Härte von 80 oder mehr in Bezug auf die E-Härte gemäß JIS K6253 oder 60 oder mehr in Bezug auf die A-Härte gemäß JIS K6253 aufweist,
wobei das elastische Silikonmaterial durch ein gehärtetes Material eines durch Additionsreaktion härtbaren Silikons gebildet ist, das aus einem Hauptmittel und Härtungsmitteln gemischt ist,
wobei das Spaltfüllmaterial (13) zwischen den Batteriezellen (11) und zwischen der Batteriezelle (11) und dem Modulgehäuse (12) auf einer Seite in einer Richtung eingefüllt ist, die eine Richtung schneidet, in der die Batteriezellen (11) nebeneinander angeordnet sind, wobei die flachen Oberflächen der Batteriezellen (11) einander gegenüberliegen, und es 20 bis 40 % auf der einen Seite der Batteriezellen (11) abdeckt und an den Batteriezellen (11) haftet, um einen Raum zwischen den Batteriezellen (11) beizubehalten und um von den Batteriezellen (11) erzeugte Wärme zu dem Modulgehäuse (12) zu leiten,
wobei in dem Teil des Modulgehäuses (12), der nicht mit dem Spaltfüllmaterial (13) gefüllt ist, ein Spalt vorhanden ist.

2. Batteriemodul (10) nach Anspruch 1, wobei der thermisch leitfähige Füllstoff mindestens einer ist, der aus Aluminiumoxid, Bornitrid, Aluminiumnitrid, Siliziumkarbid und Aluminiumhydroxid ausgewählt ist.

3. Batteriemodul (10) nach Anspruch 1 oder 2, wobei das Modulgehäuse (12) aus einer Aluminiumplatte gebildet ist.

4. Batteriemodul (10) nach einem der Ansprüche 1 bis 3, wobei das elastische Silikonmaterial, das das Spaltfüllmaterial (13) bildet, eine Zugfestigkeit von 0,38 MPa oder mehr aufweist, wenn es zwischen der Aluminiumplatte und einem Laminatfilm eingeführt ist, wobei die Zugfestigkeit mit einem Zugprüfgerät unter den Bedingungen einer Raumtemperatur von 25°C und einer Ziehgeschwindigkeit von 100 mm/min gemessen wird.

5. Batteriemodul (10) nach einem der Ansprüche 1 bis 4, wobei das elastische Silikonmaterial, das das Spaltfüllmaterial (13) bildet, eine Zugfestigkeit von 0,40 MPa oder mehr aufweist, wenn es zwischen einer Eisenplatte, die das Modulgehäuse (12) bildet, und der Laminatfolie eingeführt ist,
wobei die Zugfestigkeit mit einem Zugprüfgerät unter den Bedingungen einer Raumtemperatur von 25°C und einer Ziehgeschwindigkeit von 100 mm/min gemessen wird.

6. Batteriemodul (10) nach einem der Ansprüche 1 bis 5, wobei das Spaltfüllmaterial (13) zwischen der flachen Oberfläche der Batteriezelle (11), die an dem entfernten Ende der Anordnung der Batteriezellen (11) angeordnet ist, und einer Innenwand des Modulgehäuses (12) eingebracht ist.

7. Batteriemodul (10) nach einem der Ansprüche 1 bis 6, wobei das elastische Silikonmaterial, das das Spaltfüllmaterial (13) bildet, eine Wärmeleitfähigkeit von 3,0 W/m·K oder mehr aufweist,
wobei die Wärmeleitfähigkeit in Übereinstimmung mit ASTM D5470 gemessen wird.

8. Batteriemodul (10) nach einem der Ansprüche 1 bis 7, wobei das elastische Silikonmaterial ein gehärtetes Material aus einer flüssigen Silikonzusammensetzung mit einer Viskosität von 10 bis 500 Pa ist,
wobei die Viskosität zu dem Zeitpunkt unmittelbar nach dem Mischen des Hauptmittels und der Härtungsmittel gemessen wird und bei einer Rotationsgeschwindigkeit von 10 U/min und einer Temperatur von 25°C unter Verwendung eines Viskosimeters gemessen wird.

9. Batteriemodul (10) nach einem der Ansprüche 1 bis 8, wobei die Batteriezelle (11) Elektroden aufweist, die aus einer Oberfläche der Batteriezelle (11) herausragen; und
das Spaltfüllmaterial (13) zwischen den Batteriezellen (11) und zwischen der Batteriezelle (11) und dem Modulgehäuse (12) auf einer Seite eingebracht ist, auf der die Elektroden aus einer Oberfläche der Batteriezelle (11) herausragen.

10. Batteriemodul (10) nach einem der Ansprüche 1 bis 9, wobei die Oberfläche der Batteriezelle (11) aus einer Laminatfolie gebildet ist.

11. Batteriemodul (10) nach einem der Ansprüche 1 bis 10, wobei Trennplatten (14, 15) zwischen zwei der Batteriezellen (11) angeordnet sind,
wobei jede der Trennplatten (14, 15) dicke Eingriffsabschnitte (14a), die an beiden Enden ausgebildet sind und von denen jeder auf einer Seite vorsteht und auf der anderen Seite vertieft ist, sowie einen dünnen Halteabschnitt in einem zentralen Bereich aufweist.

12. Batteriemodul (10) nach Anspruch 11,
wobei die Batteriezellen (11) nebeneinander angeordnet sind, indem jeweils das obere Ende und das untere Ende der Batteriezellen (11) in die Eingriffsabschnitte (14a) der Trennplatten (14, 15) eingreifen.

13. Batteriemodul (10) nach Anspruch 11 oder Anspruch 12,
wobei zwischen dem Halteabschnitt der Trennplatte (14, 15) und dem Endabschnitt der Batteriezelle (11) ein Spiel vorgesehen ist, und wobei die Batteriezelle (11) im Rahmen der Trennplatte (14, 15) angeordnet ist, ohne vollständig befestigt zu sein.

14. Batteriepack (16), welches die Mehrzahl von Batteriemodulen (10) nach einem der Ansprüche 1 bis 13, ein Packgehäuse (17), in dem die Batteriemodule (10) untergebracht sind, und ein Haltematerial (18) aufweist, das in das Packgehäuse (17) eingelegt ist,
wobei das Haltematerial (18) aus dem elastischen Silikonmaterial besteht, welches das den thermisch leitfähigen Füllstoff enthaltende Spaltfüllmaterial (13) bildet, und an den Batteriemodulen (10) und dem Packgehäuse (17) haftet, um von den Batteriemodulen (10) erzeugte Wärme an das Packgehäuse (17) zu leiten.

15. Batteriepack (16) nach Anspruch 14, wobei das Packgehäuse (17) aus einer Aluminiumplatte gebildet ist.

16. Batteriepack (16) nach Anspruch 14 oder Anspruch 15, wobei das elastische Silikonmaterial, das das Spaltfüllmaterial (13) bildet, eine Zugfestigkeit von 0,80 MPa oder mehr aufweist, wenn es zwischen Aluminiumplatten, die das Packgehäuse (17) bilden, eingeführt ist,
wobei die Zugfestigkeit mit einem Zugprüfgerät unter den Bedingungen einer Raumtemperatur von 25°C und einer Ziehgeschwindigkeit von 100 mm/min gemessen wird.

17. Batteriepack (16) nach Anspruch 14 oder 16, wobei das Haltematerial (18) in Spalte zwischen zwei benachbarten Batteriemodulen (10) gefüllt ist und die Batteriemodule (10) verklebt, um einen Raum zwischen den Batteriemodulen (10) beizubehalten und um Wärme, die von einem der Batteriemodule (10) neben dem Haltematerial (18) erzeugt wird, zu dem anderen Batteriemodul (10) zu leiten.

## Revendications

1. Module de batterie (10) comprenant une pluralité d'éléments de batterie (11), un boîtier de module (12) stockant les éléments de batterie (11), et un matériau de remplissage (13) chargé dans le boîtier de module (12),
dans lequel l'élément de batterie (11) est de forme plate présentant des surfaces planes et comprend une pochette en film flexible stockant les éléments de batterie ; et
le matériau de remplissage (13) est constitué d'un matériau élastique en silicone contenant une charge thermiquement conductrice et ayant une dureté de 80 ou plus en termes de dureté E conforme à JIS K6253 ou de 60 ou plus en termes de dureté A conforme à JIS K6253,
dans lequel le matériau élastique en silicone est formé par un matériau durci d'un silicone de type durcissable par réaction d'addition mélangé à partir d'un agent principal et d'agents de durcissement,
dans lequel le matériau de remplissage (13) est chargé entre les éléments de batterie (11) et entre l'élément de batterie (11) et le boîtier de module (12) d'un côté dans une direction coupant une direction dans laquelle les éléments de batterie (11) sont disposés côte à côte avec les surfaces planes des éléments de batterie (11) se faisant face, et recouvrant 20 à 40 % dudit côté des éléments de batterie (11), et adhère aux éléments de batterie (11) pour retenir un espace entre les éléments de batterie (11) et pour conduire la chaleur générée par les éléments de batterie (11) au boîtier de module (12),
dans lequel il existe un espace dans la partie du boîtier de module (12) qui n'est pas remplie par le matériau de remplissage (13).

2. Module de batterie (10) selon la revendication 1, dans lequel la charge thermiquement conductrice est au moins une charge choisie parmi l'oxyde d'aluminium, le nitrure de bore, le nitrure d'aluminium, le carbure de silicium, et l'hydroxyde d'aluminium.

3. Module de batterie (10) selon la revendication 1 ou 2, dans lequel le boîtier de module (12) est formé d'une plaque d'aluminium.

4. Module de batterie (10) selon l'une quelconque des revendications 1 à 3, dans lequel le matériau élastique en silicone constituant le matériau de remplissage (13) a une résistance à la traction de 0,38 MPa ou plus lorsqu'il est inséré entre la plaque d'aluminium et un film stratifié,
dans lequel la résistance à la traction est mesurée par un appareil d'essai de traction dans des conditions de température ambiante de 25 °C et de vitesse de traction de 100 mm/min.

5. Module de batterie (10) selon l'une quelconque des revendications 1 à 4, dans lequel le matériau élastique en silicone constituant le matériau de remplissage (13) a une résistance à la traction de 0,40 MPa ou plus lorsqu'il est inséré entre une plaque de fer constituant le boîtier de module (12) et le film stratifié,
dans lequel la résistance à la traction est mesurée par un appareil d'essai de traction dans des conditions de température ambiante de 25 °C et de vitesse de traction de 100 mm/min.

6. Module de batterie (10) selon l'une quelconque des revendications 1 à 5, dans lequel le matériau de remplissage (13) est chargé entre la surface plane de l'élément de batterie (11) qui est positionnée à l'extrémité du réseau d'éléments de batterie (11) et une paroi intérieure du boîtier de module (12).

7. Module de batterie (10) selon l'une quelconque des revendications 1 à 6, dans lequel le matériau élastique en silicone constituant le matériau de remplissage (13) a une conductivité thermique de 3.0 W/m·K ou plus,
dans lequel la conductivité thermique est mesurée conformément à la norme ASTM D5470.

8. Module de batterie (10) selon l'une quelconque des revendications 1 à 7, dans lequel le matériau élastique en silicone est un matériau durci à partir d'une composition de silicone liquide ayant une viscosité de 10 à 500 Pa,
dans lequel la viscosité est mesurée immédiatement après le mélange de l'agent principal et des agents de durcissement, et est mesuré à une vitesse de rotation de 10 tr/min et à une température de 25°C à l'aide d'un viscosimètre.

9. Module de batterie (10) selon l'une quelconque des revendications 1 à 8, dans lequel l'élément de batterie (11) possède des électrodes qui sont projetées depuis une surface de l'élément de batterie (11) ; et
le matériau de remplissage (13) est chargé entre les éléments de batterie (11) et entre l'élément de batterie (11) et le boîtier de module (12) sur un côté dans lequel les électrodes sont projetées depuis une surface de l'élément de batterie (11).

10. Module de batterie (10) selon l'une quelconque des revendications 1 à 9, dans lequel la surface de l'élément de batterie (11) est formée d'un film stratifié.

11. Module de batterie (10) selon l'une quelconque des revendications 1 à 10, dans lequel des plaques de séparation (14, 15) sont placées entre deux des éléments de batterie (11),
dans lequel chacune des plaques de séparation (14, 15) présente des parties d'engagement épaisses (14a) qui sont formées aux deux extrémités et dont chacune est en saillie d'un côté et est en retrait de l'autre côté, ainsi qu'une partie de retenue mince dans une région centrale.

12. Module de batterie (10) selon la revendication 11,
dans lequel les éléments de batterie (11) sont disposés côte à côte en engageant chacune des extrémités supérieure et inférieure des éléments de batterie (11) dans les parties d'engagement (14a) des plaques de séparation (14, 15).

13. Module de batterie (10) selon la revendication 11 ou la revendication 12,
dans lequel un jeu est ménagé entre la partie de retenue de la plaque de séparation (14, 15) et la partie d'extrémité de l'élément de batterie (11), et l'élément de batterie (11) est disposé dans le cadre de la plaque de séparation (14, 15) sans être complètement fixé.

14. Bloc de batterie (16) comprenant la pluralité de modules de batterie (10) selon l'une quelconque des revendications 1 à 13, un boîtier (17) stockant les modules de batterie (10), et un matériau de maintien (18) chargé dans le boîtier (17),
dans lequel le matériau de maintien (18) est constitué d'un matériau élastique en silicone constituant le matériau de remplissage (13) contenant la charge thermiquement conductrice et adhère aux modules de batterie (10) et au boîtier (17) pour conduire la chaleur générée par les modules de batterie (10) au boîtier (17).

15. Bloc de batterie (16) selon la revendication 14, dans lequel le boîtier du bloc (17) est formé d'une plaque d'aluminium.

16. Bloc de batterie (16) selon la revendication 14 ou la revendication 15,
dans lequel le matériau élastique en silicone constituant le matériau de remplissage (13) a une résistance à la traction de 0,80 MPa ou plus lorsqu'il est inséré entre des plaques d'aluminium constituant le boîtier (17),
dans lequel la résistance à la traction est mesurée par un appareil d'essai de traction dans des conditions de température ambiante de 25 °C et de vitesse de traction de 100 mm/min.

17. Bloc de batterie (16) selon la revendication 14 ou 16, dans lequel le matériau de maintien (18) remplit les espaces entre deux modules de batterie (10) adjacents, et fait adhérer les modules de batterie (10) pour retenir un espace entre les modules de batterie (10) et pour conduire la chaleur générée par l'un des modules de batterie (10) adjacent au matériau de maintien (18) vers l'autre module de batterie (10).
